# FASCICULE DE BREVET EUROPEEN

(11) **EP 0 900 517 B1**
(45) Date de publication et mention de la délivrance du brevet: **12.03.2003**
(21) Numéro de dépôt: 98440190.1
(22) Date de dépôt: 01.09.1998
(51) Int. Cl.: A01D 43/10

(54) **Dispositif de conditionnement amélioré pour produits de récolte agricoles**
Verbesserte Konditionierungsvorrichtung für landwirtschaftliches Erntegut
Improved conditioner for agricultural crop

(30) Priorité: 02.09.1997 FR 9711041
(43) Date de publication de la demande: 10.03.1999
(73) Titulaire: KUHN S.A., 67700 Saverne (FR)
(72) Inventeur: Neuerburg, Horst, 67700 Saverne (FR)

(56) Documents cités:
- EP-A- 0 064 115
- EP-A- 0 100 628
- EP-A- 0 129 007
- DE-A- 3 446 321
- FR-A- 2 107 042
- FR-A- 2 428 384
- GB-A- 2 020 155

## Description

La présente invention se rapporte au domaine technique général du conditionnement de produits de récolte tels que des fourrages destinés notamment à l'alimentation animale. Un conditionnement est souvent bénéfique pour des produits de récolte destinés au séchage ou à l'ensilage car le traitement plus ou moins important desdits produits facilite l'évaporation de l'eau contenue dans ceux-ci et notamment dans leurs tiges. Un séchage accéléré peut ainsi avoir lieu.

La présente invention concerne plus particulièrement un dispositif pour réaliser un tel conditionnement. Ce dernier est souvent avantageusement associé à une faucheuse pour constituer une faucheuse-conditionneuse.

Il est déjà connu de réaliser un dispositif de conditionnement pour des produits de récolte comportant
- un caisson pourvu d'une section d'entrée et d'une section de sortie pour les produits,
- un rotor de transport pourvu de doigts et monté dans le caisson selon un axe sensiblement horizontal,
- un déflecteur agencé sur le caisson en regard du rotor de transport de manière à définir un canal de passage pour les produits du côté de la section d'entrée, ledit canal de passage présentant une certaine section de passage,
- et un peigne implanté à l'extérieur du canal de passage, ledit peigne comportant des dents susceptibles de s'engager plus ou moins profondément dans le canal de passage à travers au moins une fente ménagée dans le déflecteur.

On connaît ainsi, par l'intermédiaire du document FR-A-2 107 042 une machine à conditionner les produits agricoles de récolte, laquelle est pourvue d'un caisson et d'un rotor de transport. Ce dernier agit sur des produits ou fourrages coupés lorsqu'ils pénètrent dans le caisson. La machine décrite comporte également un déflecteur en regard du rotor de transport pour définir un canal de passage pour les produits ou fourrages. Le rotor est pourvu d'outils de transport du type doigts, lesquels coopèrent avec un peigne monté sur le caisson et dont les dents sont susceptibles de pénétrer dans le canal de passage. Les dents pénètrent ainsi plus ou moins profondément entre les surfaces balayées par les doigts. Une telle machine ne semble pas être en mesure de s'adapter à une diversité de plus en plus grande des produits agricoles ou des fourrages et des conditions de récolte. Cette diversité suppose un plus grand nombre de possibilités de réglage, lesquelles ne sont pas obtenues avec la machine décrite dans l'état de la technique.

L'objet de la présente invention vise à remédier aux inconvénients de l'état de la technique et à réaliser un dispositif de conditionnement susceptible de s'adapter à tout type de produits de récolte ou fourrages et tout type de conditions de récolte afin d'obtenir un conditionnement ou un traitement optimal desdits produits.

Un autre objet de la présente invention vise à simplifier la construction d'un dispositif de conditionnement tout en conservant un grand nombre de possibilités de réglage et en réduisant au minimum le nombre de pièces nécessaires auxdits réglages.

Les objets assignés à la présente invention sont atteints à l'aide d'un dispositif de conditionnement caractérisé en ce que le peigne est lié au déflecteur pour pouvoir être placé dans au moins deux positions différentes vis-à-vis dudit déflecteur, lequel est lui-même lié au caisson pour pouvoir être placé dans au moins deux positions différentes vis-à-vis du rotor de transport de sorte à moduler la section de passage du canal de passage.

D'autres particularités et avantages ressortiront à la lecture de la description détaillée figurant ci-après, en référence aux dessins annexés, donnés à titre d'exemples non limitatifs et dans lesquels :
- la figure 1 représente une vue de dessus d'une faucheuse-conditionneuse comportant un dispositif de conditionnement conforme à l'invention,
- la figure 2 représente une vue de côté partiellement découpée de la faucheuse-conditionneuse représentée à la figure 1,
- la figure 3 représente une vue en perspective d'un déflecteur associé à un peigne réalisant un sous-ensemble du dispositif de conditionnement conforme à l'invention,
- les figures 4, 5 et 6 représentent divers positionnements relatifs entre le peigne et le déflecteur d'un dispositif de conditionnement conforme à l'invention,
- la figure 7 représente une vue partielle d'un exemple de réalisation d'un organe de commande et de maintien d'un dispositif de conditionnement conforme à l'invention.

La présente invention concerne notamment des machines agricoles comportant un mécanisme de récolte et un dispositif de conditionnement pour produits agricoles ou pour fourrage. La machine décrite en détail est une faucheuse-conditionneuse (1), mais d'autres machines, telle une conditionneuse dépourvue d'un groupe de fauche, ne sortent pas du cadre de la présente invention.

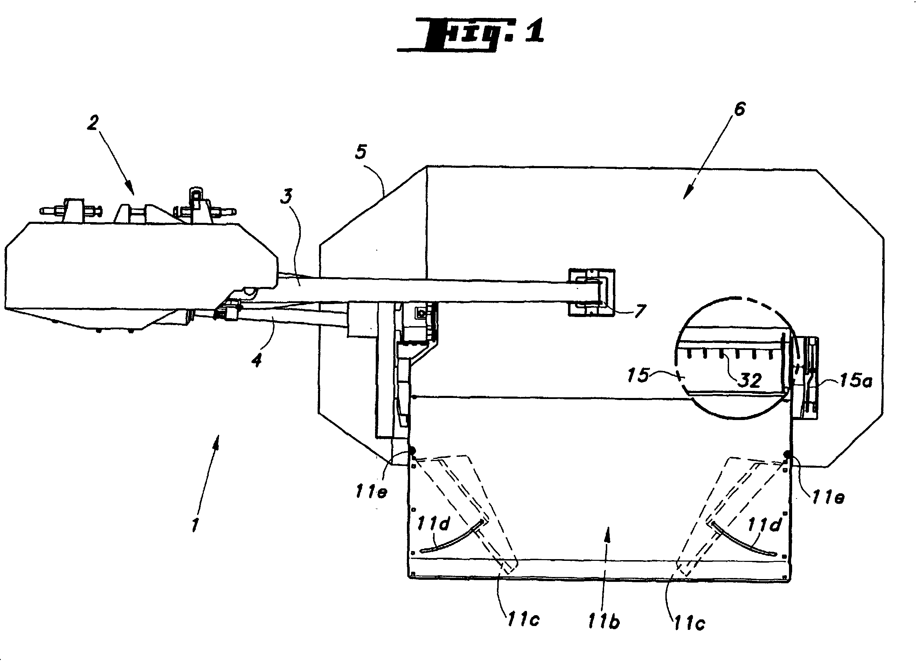

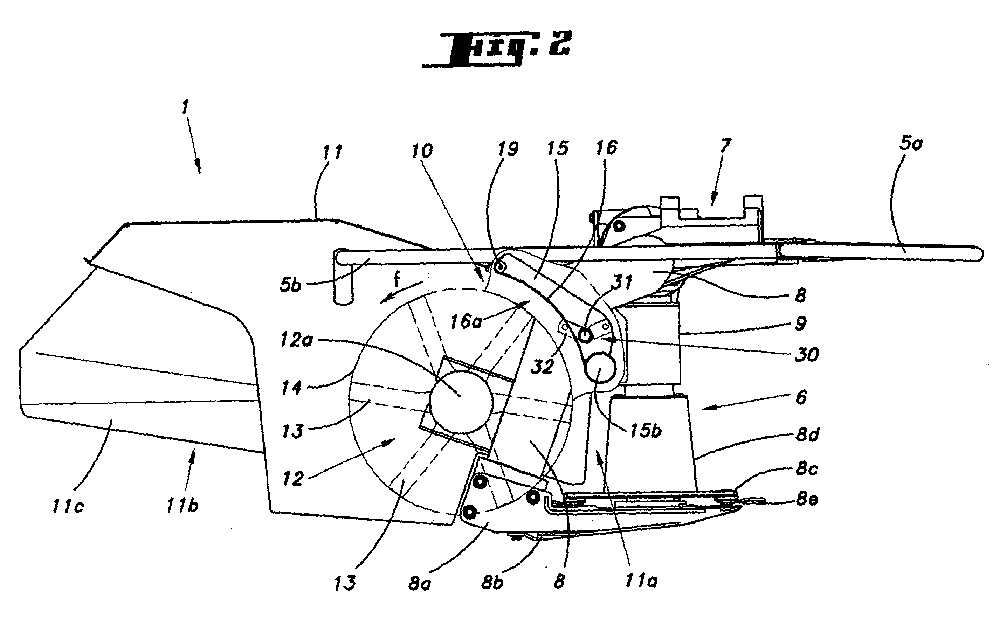

La faucheuse-conditionneuse (1) montrée en vue de dessus à la figure 1 comporte une structure d'attelage (2) pour l'accrochage à un tracteur. La structure d'attelage (2) est reliée par l'intermédiaire d'un bras articulé (3) et d'un arbre d'entraînement (4) à un mécanisme de récolte. Ce dernier est entouré d'un dispositif de protection (5) réalisé à partir d'un cadre (5b) et d'un organe protecteur avant (5a) (figure 2 notamment). Le cadre (5b) et l'organe protecteur avant (5a) sont avantageusement recouverts d'une toile pour confiner à l'intérieur du dispositif de protection (5) d'éventuelles projections de pierres ou d'autres éléments dangereux se trouvant par accident dans le fourrage à récolter.

Dans l'exemple de réalisation représenté aux figures, le mécanisme de récolte comporte notamment un mécanisme de coupe (6) (figure 2). Ce dernier est relié au bras articulé (3) à l'aide d'une articulation (7). Le mécanisme de coupe (6), représenté à la figure (2), est par exemple constitué d'un tube porteur (8) supportant une barre de coupe se terminant par un raidisseur de barre (8a) sous lequel est montée une semelle (8b) destinée à glisser sur le sol. La barre de coupe comporte également des moyens permettant de faire tourner un jeu de disques (8c) munis de couteaux ou de lames (8e). Chaque disque (8c), situé à l'extrémité de la barre de coupe, est avantageusement pourvu d'une coiffe d'andainage (8d). L'animation du mécanisme de coupe (6), à savoir la rotation des disques (8c), est assurée par un élément de transmission (9) monté sur l'un des disques (8c) situé à une extrémité du mécanisme de coupe (6), et relié à l'arbre d'entraînement (4) par tout moyen connu. C'est le tube support (8) qui est lié au bras articulé (3) au moyen de l'articulation (7).

La figure 2 montre également le dispositif de conditionnement (10) conforme à l'invention. Le dispositif de conditionnement (10) comprend un caisson (11) fixé sur le tube support (8). Le dispositif de conditionnement (10) est donc associé au mécanisme de coupe (6). Le caisson (11) présente une section d'entrée (11a) située derrière le mécanisme de coupe (6) ainsi qu'une section de sortie (11b) située à l'arrière de la faucheuse-conditionneuse (1). La section de sortie (11b) est avantageusement pourvue de déflecteurs latéraux (11c) pour réaliser un andain de produit coupé et conditionné. L'orientation des déflecteurs latéraux (11c) peut être modifiée grâce à leur montage pivotant autour d'un pivot (11e) et d'une rainure de guidage (11d) représentés à la figure 1.

Le dispositif de conditionnement (10) comporte également un rotor de transport (12) destiné d'une part à entraîner les produits ou fourrages coupés et d'autre part à conditionner lesdits produits ou fourrages. Le rotor de transport (12) est constitué d'un arbre (12a) monté dans le caisson (11) selon un axe sensiblement horizontal et entraîné en rotation directement ou indirectement par l'arbre d'entraînement (4). L'arbre (12a) est en outre pourvu de doigts (13) lesquels sont montés au moins partiellement mobiles afin de s'étendre radialement vers l'extérieur sous l'effet de la force centrifuge en définissant une trajectoire périphérique (14) de travail, lors de la rotation du rotor de transport (12). Les doigts (13) peuvent présenter diverses formes connues par l'homme du métier. Un montage desdits doigts (13) selon des axes de pivotement leur permet de s'escamoter au moins partiellement dans le cas où un obstacle ou une quantité anormale de fourrage pénètre dans la faucheuse-conditionneuse (1).

Le dispositif de conditionnement (10) conforme à l'invention comporte également un déflecteur (15) agencé sur le caisson (11) en regard du rotor de transport (12), de manière à définir un canal de passage (16a) présentant une section de passage pour les produits ou fourrages, du côté de la section d'entrée (11a). Un organe de commande (15a) est également prévu pour modifier le positionnement du déflecteur (15).

Le canal de passage (16a) est donc localisé entre une surface active (16) du déflecteur (15) et la trajectoire périphérique (14) des doigts (13). Le déflecteur (15) présente également au moins une fente (17) dont la fonction sera décrite plus loin.

Le déflecteur (15) est de préférence monté sur le caisson (11) de façon à pouvoir être pivoté autour d'un premier axe d'articulation (19 ; 19a) sous l'effet de l'actionnement de l'organe de commande (15a), modifiant ainsi la configuration et les dimensions du canal de passage (16a).

Avantageusement deux axes d'articulation (19) et (19a), décalés l'un par rapport à l'autre, sont localisés au voisinage d'une extrémité du déflecteur (15) de manière à modifier le positionnement de cette extrémité du déflecteur (15) vis-à-vis du rotor de transport (12) lorsque l'on passe d'un montage suivant l'axe d'articulation (19) à un montage suivant l'autre axe d'articulation (19a) ou inversement.

Le déflecteur (15) est par ailleurs déplacé à l'aide de l'organe de commande (15a) (figure 1). L'utilisateur obtient ainsi un pivotement de la surface active (16) autour de l'axe d'articulation (19) ou (19a) selon le montage (figure 2).

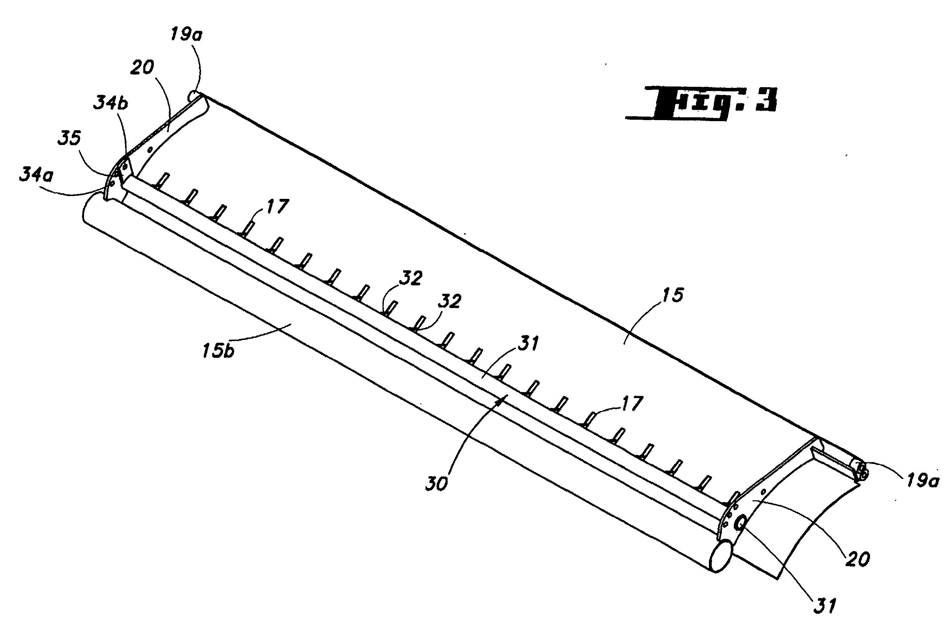

Le déflecteur (15), représenté également à la figure 3, présente une forme profilée entourant au moins partiellement la trajectoire périphérique (14). La partie du déflecteur (15), présentant la surface active (16), est en outre renforcée par une liaison avec un tube cylindrique (15b) et avec deux flasques (20) situés de part et d'autre dudit déflecteur (15). Les flasques (20) se prolongent avantageusement jusqu'à des embouts creux matérialisant les axes d'articulation (19 ; 19a).

L'assemblage des flasques (20), du tube cylindrique (15b) et de la partie réalisant la surface active (16) est obtenu par tout moyen connu et notamment par soudure.

Le dispositif de conditionnement (10) conforme à l'invention comporte également un peigne (30) articulé selon un axe (31) situé à l'extérieur du canal de passage (16a). A titre d'exemple, les figures 2 et 3, notamment, montrent un tel peigne (30) comportant des dents (32) susceptibles de s'engager au moins partiellement dans le canal de passage (16a) à travers une ou plusieurs fentes (17) ménagées dans le déflecteur (15). La figure 3 montre, à titre d'exemple, un déflecteur (15) pourvu d'une série de fentes (17) parallèles dont la forme est sensiblement complémentaire à la forme des dents (32).

Le peigne (30) est articulé vis-à-vis des fentes (17) de manière à obturer lesdites fentes (17) et ce pour chaque position des dents (32). Les produits ou fourrages projetés contre la surface active (16), laquelle présente ces fentes (17), ne pénètrent donc pas dans lesdites fentes (17) et ne risquent pas par conséquent de s'y accrocher.

L'axe (31) d'articulation du peigne (30) est monté sur les flasques (20) lesquels sont pourvus d'une ouverture adéquate pour guider en rotation ledit axe (31). Les flasques (20) s'étendent de préférence selon un plan d'extension orthogonal à la surface active (16) et à l'extérieur du canal de passage (16a).

L'axe (31) présente également un moyen pour bloquer le peigne (30) dans une position donnée. Ce moyen de blocage est constitué par exemple de languettes (35) solidaires de l'axe (31). Chaque languette (35) est située au voisinage de l'un correspondant des flasques (20) de manière à être bloquée contre ledit flasque (20). A cet effet, ladite languette (35) et ledit flasque (20) comportent respectivement des perçages (34b ; 34a) susceptibles d'être traversés par un goujon ou par tout autre élément apte à bloquer la languette (35) contre le flasque (20).

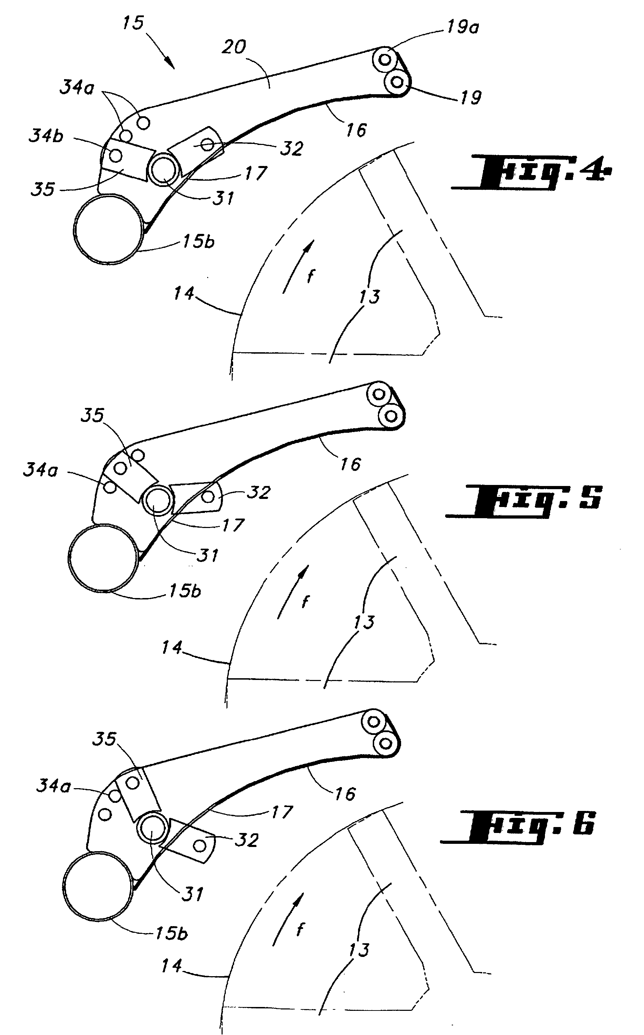

Les figures 4 à 6 représentent le déflecteur (15) avec diverses positions de réglage pour le peigne (30).

La languette (35) se trouve décalée angulairement par rapport aux dents (32) facilitant ainsi l'accès à différentes positions de réglage pour le peigne (30), lesdites positions étant localisées sur le déflecteur (15) et par conséquent hors du canal de passage (16a).

La figure 4 représente le peigne (30) avec des dents (32) ne faisant que faiblement saillie à l'intérieur du canal de passage (16a). Un tel réglage fait donc correspondre le premier des perçages (34a) du flasque (20) avec le perçage (34b) ménagé dans la languette (35).

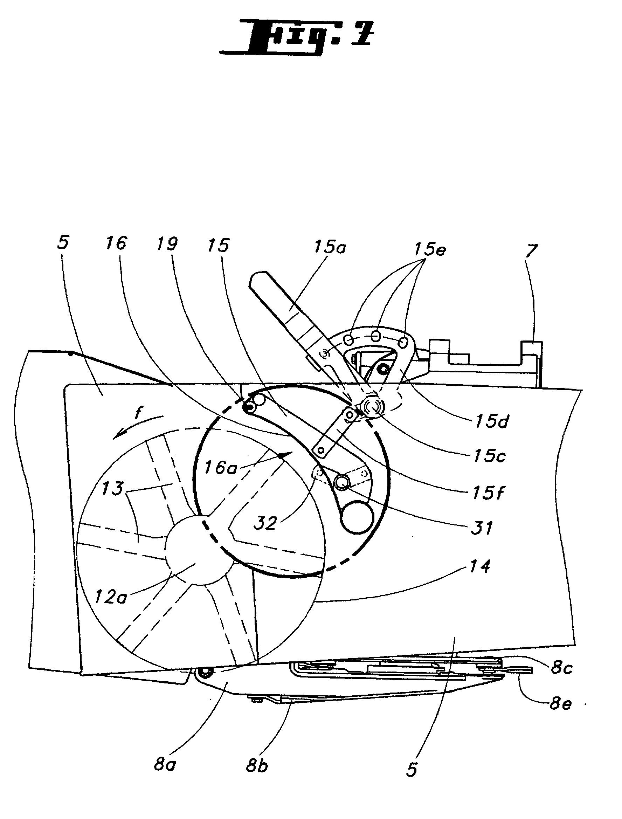

Les figures 5 et 6 correspondent à des engagements plus importants des dents (32) dans le canal de passage (16a) et par conséquent à une accentuation du conditionnement des produits ou fourrages. Ces derniers sont entraînés par le rotor de transport (12) dans le sens (f) schématisé aux figures 2 et 4 à 7.

Pour obtenir un rétrécissement du canal de passage (16a) vers l'arrière du déflecteur (15), il suffit de monter ce dernier sur l'axe d'articulation (19a) (figure 3). L'utilisateur peut ensuite actionner l'organe de commande (15a) et rapprocher ou écarter l'avant du déflecteur (15), en l'occurrence le tube cylindrique (15b), de la périphérie (14) des doigts (13).

Avec le réglage de la position des dents (32), l'utilisateur dispose donc d'un nombre important de possibilités de réglage. Chaque possibilité correspond soit à un type de produits ou fourrages soit à un degré de conditionnement donné, soit encore à des conditions de récolte spécifiques. Il est à noter que, plus on diminue les dimensions (section de passage) du canal de passage (16a), plus on augmente la vitesse avec laquelle sont éjectés les produits ou fourrages hors du dispositif de conditionnement (10). Ceci facilite également la formation d'andains.

Selon un mode de réalisation complémentaire du dispositif conforme à l'invention, les dents (32) sont susceptibles de s'étendre entre les trajectoires périphériques (14) des doigts (13). Ces derniers sont, dans ce cas, de préférence réalisé avec un matériau rigide ou métallique.

Selon un autre mode de réalisation du dispositif conforme à l'invention, les doigts (13) sont réalisés à partir d'un matériau plastique déformable ou flexible.

L'articulation du déflecteur (15) sur le caisson (11) peut, selon le cas, être adaptée pour que ledit déflecteur (15) soit susceptible de prendre deux, trois ou plus de positions vis-à-vis du rotor de transport (12).

Le dispositif de conditionnement (10) comporte de préférence des moyens pour pouvoir déplacer les dents (32) du peigne (30) dans au moins deux positions et pour maintenir lesdites dents (32) dans lesdites positions dont l'une correspond à des dents (32) s'étendant pratiquement entièrement à l'extérieur du canal de passage (16a), et dont l'autre correspond à des dents (32) faisant saillie à l'intérieur du canal de passage (16a) et ce pour chaque position du déflecteur (15).

Le dispositif de conditionnement (10) conforme à l'invention comporte donc des moyens pour déplacer les dents (32) par exemple entre au moins deux positions, l'une correspondant à des dents (32) s'étendant sensiblement à l'extérieur du canal de passage (16a), l'autre correspondant à des dents (32) faisant fortement saillie à l'intérieur du canal de passage (16a).

L'utilisateur du dispositif de conditionnement (10) dispose donc d'un grand nombre de possibilités de réglage. En effet, il a la possibilité de choisir l'un des axes d'articulation (19) ou (19a), de procéder à un réglage avec l'organe de commande (15a), d'orienter les dents (32) du peigne (30) de façon appropriée et éventuellement de choisir une vitesse de rotation donnée du rotor de transport (12). Chaque réglage peut être conservé avec des moyens de maintien ou de blocage adaptés.

La figure 7 représente un exemple de montage de l'organe de commande (15a). La figure est partiellement découpée pour visualiser l'agencement entre le rotor de transport (12), le déflecteur (15) et l'organe de commande (15a).

Ce dernier est monté sur le caisson (11) par tous moyens connus et sert à déplacer à convenance le déflecteur (15). L'organe de commande (15a) est par exemple monté sur un axe (15c) au voisinage d'un organe de repérage et blocage (15d), lequel est pourvu de trous (15e) correspondant aux positionnements possibles pour ledit organe de commande (15a). Ce dernier est également associé à une tige articulée (15f) réalisant la liaison entre ledit organe de commande (15a) et le déflecteur (15). L'agencement et le montage de ces différents éléments sont à la portée d'un homme du métier pour obtenir un pivotement ou un déplacement optimal du déflecteur (15) en actionnant l'organe de commande (15a). Avantageusement, la tige (15f) est articulée sur une extrémité de l'organe de commande (15a) selon un axe décalé par rapport à l'axe (15c). Tout élément connu du type bielle ou autre peut également convenir pour actionner le déflecteur (15).

Le dispositif de conditionnement conforme à l'invention présente l'avantage qu'un grand nombre de possibilités de réglage influence de façon inattendue et intéressante les résultats des opérations de conditionnement.

Le dispositif de conditionnement est avantageusement associé au mécanisme de coupe (6) pour constituer une faucheuse-conditionneuse.

Le dispositif conforme à l'invention trouve également son application dans toute machine agricole adaptée pour le conditionnement de produits agricoles ou de fourrages.

Avantageusement le dispositif décrit peut comporter un moyen élastique, par exemple un ressort, maintenant le déflecteur (15) dans la position choisie et permettant audit déflecteur (15) de pivoter à l'encontre de la force de rappel exercée par ledit moyen élastique. Ceci permet d'éviter des détériorations liées à un obstacle du type pierre ou autre pénétrant dans le canal de passage (16a).

## Revendications

1. Dispositif de conditionnement (10) pour des produits de récolte comportant :
- un caisson (11) pourvu d'une section d'entrée (11a) et d'une section de sortie (11b) pour les produits,
- un rotor de transport (12) pourvu de doigts (13) et monté dans le caisson (11) selon un axe sensiblement horizontal,
- un déflecteur (15) agencé sur le caisson (11) en regard du rotor de transport (12) de manière à définir un canal de passage (16a) pour les produits du côté de la section d'entrée (11a), ledit canal de passage (16a) présentant une certaine section de passage,
- au moins un peigne (30) implanté à l'extérieur du canal de passage (16a), ledit peigne (30) comportant des dents (32) susceptibles de s'engager plus ou moins profondément dans le canal de passage (16a) à travers au moins une fente (17) ménagée dans le déflecteur (15),
***caractérisé en ce* que** le peigne (30) est lié au déflecteur (15) pour pouvoir être placé dans au moins deux positions différentes vis-à-vis dudit déflecteur (15) lequel est lui-même lié au caisson (11) pour pouvoir être placé dans au moins deux positions différentes vis-à-vis du rotor de transport (12) de sorte à moduler la section de passage du canal de passage (16a).

2. Dispositif de conditionnement selon la revendication 1, ***caractérisé en ce* qu'**il est prévu un organe de commande et de blocage (15a, 15d) permettant de placer le déflecteur (15) dans ses différentes positions et de le maintenir dans celles-ci.

3. Dispositif de conditionnement selon la revendication 1 ou 2, ***caractérisé en ce* que** le déflecteur (15) est articulé sur le caisson (11) de façon à pouvoir être pivoté autour d'un axe d'articulation (19, 19a) sensiblement parallèle à l'axe du rotor de transport (12).

4. Dispositif de conditionnement selon la revendication 3, ***caractérisé en ce* qu'**au moins deux axes d'articulation (19) et (19a) décalés l'un par rapport à l'autre sont localisés au voisinage d'une extrémité du déflecteur (15) de manière à pouvoir modifier le positionnement de l'extrémité dudit déflecteur (15) vis-à-vis du rotor de transport (12), lorsque l'on change d'axe d'articulation (19; 19a).

5. Dispositif de conditionnement selon l'une quelconque des revendications 1 à 4, **caractérisé en ce que** le peigne (30) est articulé sur le déflecteur (15) de façon à pouvoir être pivoté autour d'un axe d'articulation (31) sensiblement parallèle à l'axe du rotor de transport (12).

6. Dispositif de conditionnement selon l'une quelconque des revendications 1 à 5, **caractérisé en ce qu'**il comporte des moyens (34a, 34b, 35) pour pouvoir déplacer les dents (32) du peigne (30) dans au moins deux positions, et pour maintenir lesdites dents (32) dans les positions dont l'une correspond à des dents (32) s'étendant pratiquement entièrement à l'extérieur du canal de passage (16a) et dont l'autre correspond à des dents (32) faisant saillie à l'intérieur du canal de passage (16a), et ce pour chaque position du déflecteur (15).

7. Dispositif de conditionnement selon l'une quelconque des revendications 1 à 6, ***caractérisé en ce* que** le déflecteur (15) présente une série de fentes (17) parallèles dont la forme est sensiblement complémentaire à la forme des dents (32) du peigne (30).

8. Dispositif de conditionnement selon la revendication 7, ***caractérisé en ce* que** le peigne (30) est monté vis-à-vis des fentes (17) de manière à obturer substantiellement lesdites fentes (17), et ce pour chaque position de ses dents (32).

9. Dispositif de conditionnement selon l'une quelconque des revendications 1 à 8, ***caractérisé en ce* qu'**il comporte un moyen élastique maintenant le déflecteur (15) dans ses différentes positions, ledit déflecteur (15) pouvant se déplacer à l'encontre de la force de rappel exercée par ledit moyen élastique.

10. Dispositif de conditionnement selon l'une quelconque des revendications 1 à 9, **caractérisé en ce que** les doigts (13) sont montés au moins partiellement mobiles sur le rotor de transport (12) afin de s'étendre radialement vers l'extérieur sous l'effet de la force centrifuge, en définissant une trajectoire périphérique(14) lors de la rotation dudit rotor de transport (12).

11. Machine pour le conditionnement de produits de récolte comportant un dispositif de conditionnement conforme à l'une quelconque des revendications 1 à 10.

12. Faucheuse-conditionneuse (1) comportant un mécanisme de coupe (6) destiné à couper des produits de récolte et un dispositif de conditionnement (10) des produits de récolte coupés conforme à l'une quelconque des revendications 1 à 10.

## Patentansprüche

1. Aufbereitungsvorrichtung (10) für Erntegut, die
- einen mit einem Eintrittsabschnitt (11a) und einem Austrittsabschnitt (11b) für das Gut versehenen Kasten (11),
- einen mit Fingern (13) versehenen Förderrotor (12), der gemäß einer im Wesentlichen horizontalen Achse im Kasten (11) angebracht ist,
- ein gegenüber dem Förderrotor (12) so am Kasten (11) angeordnetes Prallblech (15), dass es einen Durchgangskanal (16a) für das Gut auf der Seite des Eintrittsabschnitts (11a) definiert, wobei der Durchgangskanal (16a) einen bestimmten Durchgangsquerschnitt aufweist,
- mindestens einen außerhalb des Durchgangskanals (16a) angeordneten Kamm (30), der Zähne (32) umfasst, die durch mindestens einen in dem Prallblech (15) ausgebildeten Schlitz (17) mehr oder weniger tief in den Durchgangskanal (16a) eingreifen können,
umfasst, ***dadurch gekennzeichnet,* dass** der Kamm (30) so mit dem Prallblech (15) verbunden ist, dass er in mindestens zwei verschiedenen Positionen gegenüber dem Prallblech (15) angeordnet werden kann, das selbst so mit dem Kasten (11) verbunden ist, dass es in mindestens zwei verschiedenen Positionen gegenüber dem Förderrotor (12) angeordnet werden kann, um den Durchtrittsquerschnitt des Durchgangskanals (16) zu ändern.

2. Aufbereitungsvorrichtung nach Anspruch 1, ***dadurch gekennzeichnet,* dass** ein Betätigungs- und ein Verriegelungselement (15a, 15d) vorgesehen sind, die ein Verschieben des Prallblechs (15) in seine verschiedene Positionen und sein Halten darin gestatten.

3. Aufbereitungsvorrichtung nach Anspruch 1 oder 2, ***dadurch gekennzeichnet,* dass** das Prallblech (15) so am Kasten (11) angelenkt ist, dass es um eine im Wesentlichen parallel zur Achse des Förderrotors (12) verlaufende Gelenkachse (19, 19a) schwenken kann.

4. Aufbereitungsvorrichtung nach Anspruch 3, ***dadurch gekennzeichnet,* dass** mindestens zwei zueinander versetzte Gelenkachsen (19) und (19a) in der Nähe eines Endes des Prallblechs (15) angeordnet sind, um die Positionierung des Endes des Prallblechs (15) gegenüber dem Förderrotor (12) ändern zu können, wenn die Gelenkachse (19; 19a) gewechselt wird.

5. Aufbereitungsvorrichtung nach irgend einem der Ansprüche 1 bis 4, ***dadurch gekennzeichnet,* dass** der Kamm (30) so an dem Prallblech (15) angelenkt ist, dass er um eine im Wesentlichen parallel zur Achse des Förderrotors (12) verlaufende Gelenkachse (31) geschwenkt werden kann.

6. Aufbereitungsvorrichtung nach irgend einem der Ansprüche 1 bis 5, ***dadurch gekennzeichnet,* dass** sie Mittel (34a, 34b, 35) zum Verschieben der Zähne (32) des Kamms (30) in mindestens zwei Positionen und zum Halten der Zähne (32) in den Positionen umfasst, wobei sich die Zähne (32) in der einen Position davon praktisch vollständig außerhalb des Durchgangskanals (16a) erstrecken und in der anderen Position in das Innere des Durchgangskanals (16a) vorragen, und zwar bei jeder Position des Prallblechs (15).

7. Aufbereitungsvorrichtung nach irgend einem der Ansprüche 1 bis 6*,* ***dadurch gekennzeichnet,* dass** das Prallblech (15) eine Reihe von parallelen Schlitzen (17) aufweist, deren Form im Wesentlichen komplementär zur Form der Zähne (32) des Kamms (30) ist.

8. Aufbereitungsvorrichtung nach Anspruch 7, ***dadurch gekennzeichnet,* dass** der Kamm (30) so gegenüber den Schlitzen (17) angebracht ist, dass die Schlitze (17) im Wesentlichen verschlossen werden, und zwar bei jeder Position seiner Zähne (32).

9. Aufbereitungsvorrichtung nach irgend einem der Ansprüche 1 bis 8, ***dadurch gekennzeichnet*, dass** sie ein elastisches Mittel umfasst, das das Prallblech (15) in seinen verschiedenen Positionen hält, wobei sich das Prallblech (15) gegen die durch das elastische Mittel ausgeübte Rückstellkraft bewegen kann.

10. Aufbereitungsvorrichtung nach irgend einem der Ansprüche 1 bis 9, ***dadurch gekennzeichnet,* dass** die Finger (13) zumindest teilweise beweglich am Förderrotor (12) angebracht sind, um sich unter der Wirkung der Zentrifugalkraft radial nach außen zu erstrecken, wobei sie bei der Drehung des Förderrotors (12) eine Umfangsbahn (14) definieren.

11. Maschine zur Aufbereitung von Erntegut mit einer Aufbereitungsvorrichtung nach irgend einem der Ansprüche 1 bis 10.

12. Mäh-/Knickzetter (1) mit einem Schneidmechanismus (6), der das Erntegut schneiden soll, und einer Vorrichtung (10) zur Aufbereitung des geschnittenen Ernteguts gemäß irgend einem der Ansprüche 1 bis 10.

## Claims

1. Conditioning device (10) for harvested products comprising:
- a box (11) provided with an inlet section (11a) and an outlet section (11b) for the products,
- a conveying rotor (12) provided with fingers (13) and mounted in the box (11) about a substantially horizontal axis,
- a deflector (15) arranged on the box (11) facing the conveying rotor (12) so as to define a passageway (16a) for the products on the same side as the inlet section (11a), the said passageway (16a) having a certain passage cross section,
- at least one comb (30) installed on the outside of the passageway (16a), the said comb (30) having teeth (32) able to engage more or less deeply in the passageway (16a) through at least one slot (17) made in the deflector (15),
***characterized in* that** the comb (30) is connected to the deflector (15) so as to be able to be placed in at least two different positions with respect to the said deflector (15) which is itself connected to the box (11) so as to be able to be placed in at least two different positions with respect to the conveying rotor (12) so as to alter the passage cross section of the passageway (16a).

2. Conditioning device according to Claim 1, ***characterized in* that** there is a control and locking element (15a, 15d) allowing the deflector (15) to be placed in its various positions and held there.

3. Conditioning device according to Claim 1 or 2, ***characterized in* that** the deflector (15) is articulated to the box (11) in such a way as to be able to be pivoted about an axis of articulation (19, 19a) substantially parallel to the axis of the conveying rotor (12).

4. Conditioning device according to Claim 3, ***characterized in* that** at least two axes of articulation (19) and (19a), offset with respect to one another, are located near one end of the deflector (15) so as to be able to alter the location of the end of the said deflector (15) with respect to the conveying rotor (12) when the axis of articulation (19; 19a) is changed.

5. Conditioning device according to any one of Claims 1 to 4, ***characterized in* that** the comb (30) is articulated to the deflector (15) in such a way as to be able to be pivoted about a hinge pin (31) substantially parallel to the axis of the conveying rotor (12).

6. Conditioning device according to any one of Claims 1 to 5, ***characterized in* that** it comprises means (34a, 34b, 35) for being able to move the teeth (32) of the comb (30) into at least two positions, and for keeping the said teeth (32) in the positions one of which corresponds to teeth (32) extending almost fully outside the passageway (16a) and the other of which corresponds to teeth (32) projecting into the passageway (16a), this being for each position of the deflector (15).

7. Conditioning device according to any one of Claims 1 to 6, ***characterized in* that** the deflector (15) has a series of parallel slots (17) the shape of which substantially complements the shape of the teeth (32) of the comb (30).

8. Conditioning device according to Claim 7, ***characterized in* that** the comb (30) is mounted in front of the slots (17) in such a way as to substantially block the said slots (17), this being for each position of its teeth (32).

9. Conditioning device according to any one of Claims 1 to 8, ***characterized in* that** it comprises an elastic means keeping the deflector (15) in its various positions, the said deflector (15) being able to be moved against the return force exerted by the said elastic means.

10. Conditioning device according to any one of Claims 1 to 9, ***characterized in* that** the fingers (13) are mounted at least partially able to move on the conveying rotor (12) so that they extend radially outwards under the effect of centrifugal force, defining a peripheral path (14) as the said conveying rotor (12) turns.

11. Machine for conditioning harvested products comprising a conditioning device according to any one of Claims 1 to 10.

12. Mower-conditioner (1) comprising a cutting mechanism (6) intended to cut the harvested products and a device (10) for conditioning the cut harvested products in accordance with any one of Claims 1 to 10.
